# EUROPÄISCHE PATENTANMELDUNG

(11) **EP 2 320 407 A1**
(43) Veröffentlichungstag der Anmeldung: **11.05.2011**
(21) Anmeldenummer: 09175375.6
(22) Anmeldetag: 09.11.2009
(51) Int. Cl.: G09B 5/00, G09B 7/00

(54) **Computerunterstütztes System zur Erfassung und Bewertung menschlicher Fähigkeiten**

(71) Anmelder: IBS - Institut für berufliche Bilding und EDV-Schulung GmbH, 01979 Lauchhammer (DE)
(72) Erfinder: Dr. Muschter, Lothar, 01945, Tettau (DE); Jahn, Hans, 04910, Elsterwerda (DE)
(74) Vertreter: Carlsohn, Alexander

(57) **Zusammenfassung**

Die Erfindung betrifft ein Verfahren zur Erfassung und Bewertung menschlicher Fähigkeiten mittels eines computergestützten Systems, wobei das System eine Vielzahl von Client-Computern umfasst, die über eine Kommunikationseinrichtung mit einem Host-Computer verbunden sind. Dabei ist vorgesehen, dass
- auf dem Host-Computer eine Vielzahl von Datensätzen, die jeweils eine Instruktion für eine Testperson und zumindest eine erwartete Reaktion der Testperson beschreiben, gespeichert ist, wobei jeder Datensatz mit einem
mehrdimensionalen Codesystem gekennzeichnet ist, das aus ersten Codes gebildet ist, wobei jeder erste Code eine Eigenschaft des Datensatzes kennzeichnet; und
- aus der Vielzahl von Datensätzen eine oder mehrere erste Datensatzgruppen mit einer vorgegebenen Zahl von Datensätzen ausgewählt sind, wobei jeder Datensatz einer Datensatzgruppe zumindest einen gemeinsamen ersten Code, den keine andere Datensatzgruppe aufweist, und zumindest einen gemeinsamen ersten Code aufweist, den auch andere Datensatzgruppen aufweisen können.

## Beschreibung

Die Erfindung betrifft ein computerunterstütztes System zur Erfassung und Bewertung menschlicher Fähigkeiten sowie ein Verfahren zur Erfassung und Bewertung menschlicher Fähigkeiten unter Verwendung des computergestützten Systems.

Aus EP 0710 942 B1 ist ein computergestütztes System zum Instruieren von Schülern bekannt. Dieses System umfasst Mikrocomputer, auf denen Ausbildungsprogramme gespeichert sind. Die Schüler haben auf diese Mikrocomputer über eine Kommunikationseinrichtung Zugriff, um Ausbildungsprogramme auszuwählen und zu durchlaufen. Ferner ist ein Telefonnetzwerk vorgesehen, das die Kommunikationseinrichtung mit einem Echtzeit-Ratgeber verbinden kann. Schließlich können mit Hilfe einer Administratoreinrichtung die Fortschritte des Schülers beurteilt, und falls diese Fortschritte unzureichend sind, der Schüler mit dem Ratgeber verbunden werden.

Das in EP 0710 942 B1 beschriebene computergestützte System beurteilt somit die Fähigkeiten eines Schülers, nachdem dieser ein Lehrprogramm absolviert hat. Es ist jedoch wünschenswert, die Fähigkeit des Schülers auch festzustellen, bevor er das Lehrprogramm absolviert, um so beispielsweise das Lehrprogramm auf die ursprünglichen Fähigkeiten des Schülers abstellen zu können. In EP 0710 942 B1 werden zwar Lernprofile auf Basis von physiologischen Standardtechniken und persönlichen Gesprächen mit einem Betreuer und auf Basis von Standardtests erzeugt. Ein auch nur annähernd objektives Ergebnis wird auf diese Weise nur schwer erhalten.

Aufgabe der Erfindung ist es, die Nachteile nach dem Stand der Technik zu beseitigen. Es sollen insbesondere ein computerunterstütztes System zur Erfassung und Bewertung menschlicher Fähigkeiten sowie ein Verfahren zur Erfassung und Bewertung menschlicher Fähigkeiten unter Verwendung des computergestützten Systems angegeben werden, die die objektive Feststellung der Fähigkeiten von Testpersonen vor Beginn oder nach Abschluss eines Lernprozesses ermöglichen sollen.

Diese Aufgabe wird durch die Merkmale der Ansprüche 1 und 14 gelöst. Zweckmäßige Ausgestaltungen der Erfindungen ergeben sich aus den Merkmalen der Ansprüche 2 bis 13 sowie 15.

Nach Maßgabe der Erfindung ist ein Verfahren zur Erfassung und Bewertung menschlicher Fähigkeiten mittels eines computergestützten Systems vorgesehen, wobei das System eine Vielzahl von Client-Computern umfasst, die über eine Kommunikationseinrichtung mit einem Host-Computer verbunden sind, wobei
- auf dem Host-Computer eine Vielzahl von Datensätzen, die jeweils eine Instruktion für eine Testperson und zumindest eine erwartete Reaktion der Testperson beschreiben, gespeichert ist, wobei jeder Datensatz mit einem mehrdimensionalen Codesystem gekennzeichnet ist, das aus ersten Codes gebildet ist, wobei jeder erste Code eine Eigenschaft des Datensatzes kennzeichnet; und
- aus der Vielzahl von Datensätzen eine oder mehrere erste Datensatzgruppen mit einer vorgegebenen Zahl von Datensätzen ausgewählt sind, wobei jeder Datensatz einer Datensatzgruppe zumindest einen gemeinsamen ersten Code, den keine andere Datensatzgruppe aufweist, und zumindest einen gemeinsamen ersten Code aufweist, den auch andere Datensatzgruppen aufweisen können;
wobei das Verfahren die folgenden Schritte umfasst:
(a) Erfassen von Merkmalen der Testperson über einen Client-Computer, wobei jedem Merkmal ein zweiter Code zugeordnet ist und zumindest einem zweiten Code der erste Code zugeordnet ist;
(b) Übermitteln der erfassten zweiten Codes an den Host-Computer, Vergleichen der zweiten Codes mit den ersten Codes und Auswählen einer ersten Datensatzgruppe, die Datensätze umfasst, bei denen der zweite Code mit dem ersten Code, den keine andere Datensatzgruppe aufweist, übereinstimmt; Übermitteln der Datensätze der ausgewählten Datensatzgruppe an den Client-Computer und Präsentieren der Instruktionen, die in den übermittelten Datensätzen enthalten sind, der Testperson;
(c) Erfassen der Reaktionen der Testperson auf jede präsentierte Instruktion eines übermittelten Datensatzes über den Client-Computer und Übermitteln der erfassten Reaktion an den Host-Computer, und
(d) Bilden eines ersten Scores, der für die menschlichen Fähigkeiten der Testperson charakteristisch ist, anhand der erfassten und übermittelten Reaktionen der Testperson, indem diese Reaktionen einer vorgegebenen Zahl von Bewertungsgruppen zugeordnet werden.

Das erfindungsgemäße Verfahren ist insbesondere dadurch gekennzeichnet, dass jeder Datensatz mit mehreren ersten Codes gekennzeichnet ist. Jede erste Datensatzgruppe weist nur Datensätze mit einem gemeinsamen ersten Code auf, den keine andere erste Datensatzgruppe aufweist. Datensätze können somit nur einer dieser Datensatzgruppen zugeordnet werden, wenn sie alle diesen gemeinsamen ersten Code aufweisen. Die übrigen ersten Codes von Datensätzen einer Datensatzgruppe können gleich oder unterschiedlich sein und mit den ersten Codes von Datensätzen anderer Datensatzgruppen übereinstimmen.

Vorzugsweise umfasst das mehrdimensionale Codesystem folgende erste Codes:
- einen ersten Code D1, der das Gebiet charakterisiert, auf dem Fähigkeiten der Testperson erfasst und bewertet werden sollen;
- einen ersten Code D2, der die Fähigkeit der Testperson charakterisiert, die erfasst und bewertet werden soll;
- einen ersten Code D3, der eine Aufgabe charakterisiert, die zur Erfassung und Bewertung der Fähigkeit der Testperson geeignet ist; und
- einen ersten Code D4, der einen Begriff charakterisiert, der die Aufgabe kennzeichnet.

Ferner kann das mehrdimensionale Codesystem zumindest einen der folgenden ersten Codes umfassen:
- einen ersten Code D5, der die Art der erwarteten Reaktion charakterisiert;
- einen ersten Code D6, der die Sprache der Instruktion und der erwarteten Reaktion charakterisiert; und
- einen ersten Code D8, der das Land, in der die Instruktion der Testperson präsentiert werden soll, charakterisiert.

Zweckmäßigerweise ist der gemeinsame erste Code von Datensätzen einer ersten Datensatzgruppe, den keine andere Datensatzgruppe aufweist, der erste Code D1. Ein gemeinsamer erster Code der Datensätze dieser ersten Datensatzgruppe, den auch andere Datensatzgruppen aufweisen können, ist dann beispielsweise der Code D2 oder ein anderer erster Code mit Ausnahme von Code D1.

Die vorstehende Aufzählung der ersten Codes ist nicht abschließend. Weitere erste Codes beispielsweise sind nachstehend beschrieben, wobei auch andere oder zusätzlich erste Codes vorgesehen sein können.

Vorzugsweise umfassen die zweiten Codes, die die Merkmale einer Testperson charakterisieren, einen zweiten Code T1, der das Gebiet charakterisiert, auf dem Fähigkeiten der Testperson erfasst und bewertet werden sollen. Beispielsweise kann zumindest einer der folgenden zweiten Codes in Schritt (a) vorgesehen sein:
- ein zweiter Code T6, der die Sprache der Testperson charakterisiert; und
- ein zweiter Code T7, der die Identität der Testperson charakterisiert.

Die vorstehende Aufzählung der zweiten Codes ist nicht abschließend. Weitere zweite Codes sind beispielsweise nachstehend beschrieben, wobei auch andere oder zusätzliche zweite Codes vorgesehen sein können.

Die ersten und zweiten Codes können beispielsweise aus numerischen oder alphanumerischen Zeichen oder Zeichenfolgen bestehen.

In einer bevorzugten Ausführungsform ist der zweite Code T1 dem ersten Code D1 zugeordnet. Damit wird in Schritt (b) des erfindungsgemäßen Verfahrens die erste Datensatzgruppe, die dem Client-Computer der Testperson übermittelt wird, ausgewählt, bei der der erster Code D1 dem zweiten Code T1 entspricht. Es kann vorgesehen sein, dass weitere zweite Codes mit diesen zugeordneten ersten Codes für die Auswahl einer ersten Datensatzgruppe übereinstimmen müssen. Beispielsweise kann vorgesehen sein, dass anhand des zweiten Codes T6, der die Sprache der Testperson charakterisiert, nur eine Datensatzgruppe ausgewählt wird, bei der die Codes D1 und T1 und die Codes D6 und T6 übereinstimmen.

Vorzugsweise ist zumindest einer der Client-Computer einer ersten Personengruppe, deren Fähigkeiten erfasst und bewertet werden sollen, zugeordnet und zumindest ein anderer der Client-Computer einer zweiten Personengruppe zugeordnet. Die Personen der ersten Personengruppe sind von den Personen der zweiten Personengruppe verschieden. Eine Person der ersten Personengruppe ist die Testperson. Eine Person der zweiten Personengruppe ist beispielsweise ein Auditor, beispielsweise die Person, die aus der Vielzahl der Datensätze die ersten Datensatzgruppen auswählt; zusätzliche Datensätze zu den Datensätzen, die auf den Host-Computer gespeichert sind, hinzufügt; vorhandene Datensätze ändert; und/oder erste Codes von Datensätzen ändert oder neue Codes hinzufügt.

Ergibt sich in Schritt (b) beim Vergleich der ersten mit den zweiten Codes, dass mehrere erste Datensatzgruppen ausgewählt werden könnten, so kann anhand eines zweiten Codes, nämlich Code T7, d. h. der eindeutigen Kennziffer für die Testperson, eine erste Datensatzgruppen, die der Testperson übermittelt werden soll, aus diesen ersten Datensatzgruppen ausgewählt werden. Dazu kann ein erster Code D7 vorgesehen sein, der alle Datensätze einer Datensatzgruppe einer oder mehreren bestimmten Kennziffern (T7), beispielsweise einem Bereich von Kennziffern (T7) zuordnet. Der Code D7 wird von einem Auditor vorgeben. Er enthält keinen Wert, der dauerhaft mit dem Datensatz verbunden ist, sondern kann jederzeit von dem oder einen anderen Auditor geändert werden. Unter gleichen Umständen kann der Auditor auch in Bezug auf die zweite Datensatzgruppe vorgeben.

In Schritt (d) kann vorgesehen sein, dass jeder Reaktion ein erster Klassifikator zugeordnet wird. Der erste Klassifikator kann verwendet werden, um die Reaktion der Testperson auf die Instruktionen eines Datensatzes einer ersten Bewertungsgruppe, wenn die Reaktion der Person eine erwartete Reaktion ist, oder einer zweiten Bewertungsgruppe zuzuordnen, wenn die Reaktion der Person nicht eine erwartete Reaktion ist. Auf Basis dieser Klassifikation wird der erste Score gebildet.

Das erfindungsgemäße Verfahren ermöglicht eine objektivere Beurteilung der Fähigkeiten einer Testperson, beispielsweise eines gegenwärtigen oder potentiellen Schülers, Lehrlings, Studenten oder Mitarbeiters, aufgrund der Bildung eines mehrdimensionalen Codesystem, mit dem die Datensätze verbunden sind, die der Testperson präsentiert werden können. Das Codesystem ermöglicht die gezielte Auswahl von Datensatzgruppen, die als Prüfungen der Testperson präsentiert werden können. Anhand der Reaktionen der Testperson auf die Instruktionen, die in den präsentierten Datensätzen enthalten sind und die von dem Client-Rechner erfasst werden, können deren Fähigkeiten erfasst und bewertet werden. Dabei können die Datensatzgruppen einer Vielzahl von Testpersonen präsentiert werden.

Ein weiterer Vorteil des erfindungsgemäßen Verfahrens liegt darin, dass der Auditor aus den vorhandenen Datensätzen immer neue Datensatzgruppen zusammenstellen kann, um die Fähigkeiten von Testpersonen zu erfassen. Beispielsweise kann er vorhandene Datensätze, die einen bestimmten Code D2 aufweisen, zu neuen Datensatzgruppen zusammenstellen, wenn die mit D2 codierte Eigenschaft des Datensatzes auch für ein weiteres Gebiet, das mit D1 codiert ist, von Bedeutung ist.

Zusätzlich kann vorgesehen sein, dass
- auf Basis des für die Testperson gebildeten Scores eine zweite Datensatzgruppe, die eine vorgegebene Zahl von Datensätzen umfasst, ausgewählt wird, wobei die zweite Datensatzgruppe nur solche Datensätze umfasst, die mit einem der ersten Codes gekennzeichnet sind, wobei dieser Code den Score codiert, der erforderlich ist, damit diese Datensätze der zweiten Datensatzgruppe zugeordnet werden können; die ausgewählten Datensätze an den Client-Computer übermittelt werden, und die Instruktionen, die in den übermittelten Datensätzen enthalten sind, der Testperson präsentiert werden; und
- die Reaktionen der Testperson auf jede präsentierte Instruktion eines übermittelten Datensatzes über den Client-Computer erfasst und an den Host-Computer übermittelt werden, wobei jeder Reaktion ein zweiter Klassifikator zugeordnet wird, wobei der Klassifikator die Reaktion der Testperson einer von wenigstens zwei Bewertungsgruppen zuordnet und auf Basis dieser Klassifikation ein zweiter Score gebildet wird, der für die menschlichen Fähigkeiten der Testperson charakteristisch ist.

Damit wird einer Testperson eine erste Gruppe von Datensätzen mit Instruktionen präsentiert und auf Basis der Ergebnisse dieser Präsentation ein erster Score gebildet, der für die Auswahl weiterer Datensätze mit Instruktionen herangezogen wird.

Bei der ersten Datensatzgruppe handelt es sich vorzugsweise um Datensätze, die Instruktionen in Form einer zu beantwortenden Frage enthalten und mehrere Antworten auf die Frage vorgeben, wobei die erwartete Reaktion der Testperson das Auswählen einer oder mehrerer richtiger Antworten und das Verwerfen aller falschen Antworten ist. Diese Art von Datensätzen entspricht einem Multiple-Choise-Test. Diese Eigenschaft des Datensatzes, eine Frage zu enthalten, bei der mehrere Antworten vorgegeben sind, von denen mindestens eine richtig ist, während die übrigen falsch sind, ist mittels eines der ersten Codes, nämlich Code D5, gekennzeichnet.

Bei der zweiten Gruppe von Datensätzen handelt es sich vorzugsweise um Datensätze, die Instruktionen in Form einer zu beantwortenden Frage enthalten, ohne dass eine Antwort vorgegeben wird. Diese Art der Frage, die als "offene Fragen" bezeichnet wird, wird von einer Testperson in der Regel als schwieriger empfunden als die Antwort auf Fragen aus der ersten Gruppe von Datensätzen. Instruktionen aus Datensätzen der zweiten Gruppe sollten daher nur Testpersonen präsentiert werden, die einen vorgegebenen Score bei der Reaktion auf die Instruktionen aus Datensätzen der ersten Gruppe erreicht haben. Der erforderliche Score ist eine Eigenschaft, die mittels eines der ersten Codes beschrieben ist. Ist ein Score erforderlich, so gehört der Datensatz nicht zur ersten Datensatzgruppe, da dort kein Score verlangt wird; d. h. die Eigenschaft, dass ein Score erforderlich ist, ist in einem solchen Datensatz beispielweise mit "Nein" oder "0" codiert. Alternativ oder zusätzlich kann die Eigenschaft des Datensatzes, die Instruktion in Form einer offenen Frage zu enthalten, mit dem Codes D5 beschrieben sein.

Ebenso kann vorgesehen sein, dass
- auf Basis des für die Testperson gebildeten ersten Scores eine zweite Datensatzgruppe, die eine vorgegebene Zahl von Datensätzen umfasst, ausgewählt wird, wobei die zweite Datensatzgruppe nur solche Datensätze umfasst, die mit einem der ersten Codes gekennzeichnet sind, wobei dieser Code den Score codiert, der erforderlich ist, damit diese Datensätze der zweiten Datensatzgruppe zugeordnet werden können; die ausgewählten Datensätze an den Client-Computer übermittelt werden, und die Instruktionen, die in den übermittelten Datensätzen enthalten sind, der Testperson präsentiert werden;
- die Reaktionen der Testperson auf jede präsentierte Instruktion eines übermittelten Datensatzes über den Client-Computer erfasst und an den Host-Computer übermittelt werden; und
- zumindest einer der Client-Computer einer ersten Personengruppe, deren Fähigkeiten erfasst und bewertet werden sollen, zugeordnet wird und zumindest ein anderer der Client-Computer einer zweiten Personengruppen zugeordnet wird, wobei auf den Client-Computer von dem Host-Computer der erste Score einer Testperson sowie die dieser Testperson übermittelten Datensätze der zweiten Datensatzgruppe und deren Reaktionen übertragen werden; und eine Person der zweiten Gruppe über einen Client-Computer eine Klassifikation der Reaktionen der Testperson auf die Instruktionen der Datensätze der zweiten Datensatzgruppe unter Bildung eines zweiten Scores vornimmt.

Die Hinzuziehung einer Person der zweiten Gruppe, beispielweise des Auditors, der den Ablauf des erfindungsgemäßen Verfahrens überwacht, kann den Vorteil haben, dass Reaktionen von Testpersonen, die nicht den erwarteten Ergebnissen entsprechen, beispielsweise weil sie aufgrund von Defiziten eine ungeeignete Wortwahl verwenden, vom Auditor überprüft und angemessener bewertet werden können. Eine automatisierte Klassifikation kann den Nachteil haben, dass an sich richtige Reaktionen als falsch klassifiziert werden, beispielsweise weil in der Antwort grobe grammatische oder orthographische Fehler enthalten sind, die mittels eines computergestützten Mustervergleiches (Screening) zwischen erwarteter Reaktion und erhaltener Antwort nicht mehr als richtig erkannt werden.

Die Datensätze der zweiten Datensatzgruppe sollten ebenfalls einen gemeinsamen ersten Code, vorzugsweise Code D1 aufweisen. Die zweite Datensatzgruppe wird dann einer Testperson übermittelt, wenn auch die Datensätze der zweiten Datensatzgruppe der Bedingung D1 gleich T1 und, falls erwünscht, D6 = T6 und D7 = T7 entsprechen.

Der Auditor kann über seinen Client-Computer von dem Host-Computer zumindest eine der Informationen über die Testperson anfordern, die aus der Gruppe ausgewählt sind, die den erste Score, den zweiten Score, die der Testperson übermittelten Datensätze der ersten und der zweiten Datensatzgruppe und deren Reaktionen übertragen werden.

Anhand des ersten Scores und gegebenenfalls des zweiten Scores kann eine zuverlässige Aussage über die Fähigkeiten einer Testperson getroffen werden. Entsprechen der erste Score und gegebenenfalls der zweite Score den Vorgaben des Auditors, kann die Testperson einem weiteren Test unterzogen werden, beispielsweise in einem persönlichen Gespräch mit dem Auditor, einem Audit, einem Assessment oder einer praktischen Übung. Testpersonen, die die erwarteten Scores nicht erreichen, werden somit von Testpersonen, die die gewünschten Fähigkeiten besitzen, auf objektivere Weise getrennt.

Es kann vorgesehen sein, dass über einen Client-Computer, der einer Person der zweiten Personengruppe zugeordnet ist, neue Datensätze und deren erste Codes eingegeben und/oder dass erste Codes gespeicherter Datensätze verändert werden. Auf diese Weise können die Datensätze an veränderte Rahmenbedingungen angepasst werden.

Die Erfindung wird nachstehend anhand von Ausführungsbeispielen, die die Erfindung nicht einschränken sollen, unter Bezugnahme auf die Zeichnungen näher erläutert. Dabei zeigen
- Fig. 1: eine schematische Darstellung eines mehrdimensionalen Codesystems von Datensätzen; und
- Fig. 2: ein Ablaufschema einer Ausführungsform des erfindungsgemäßen Ver- fahrens.

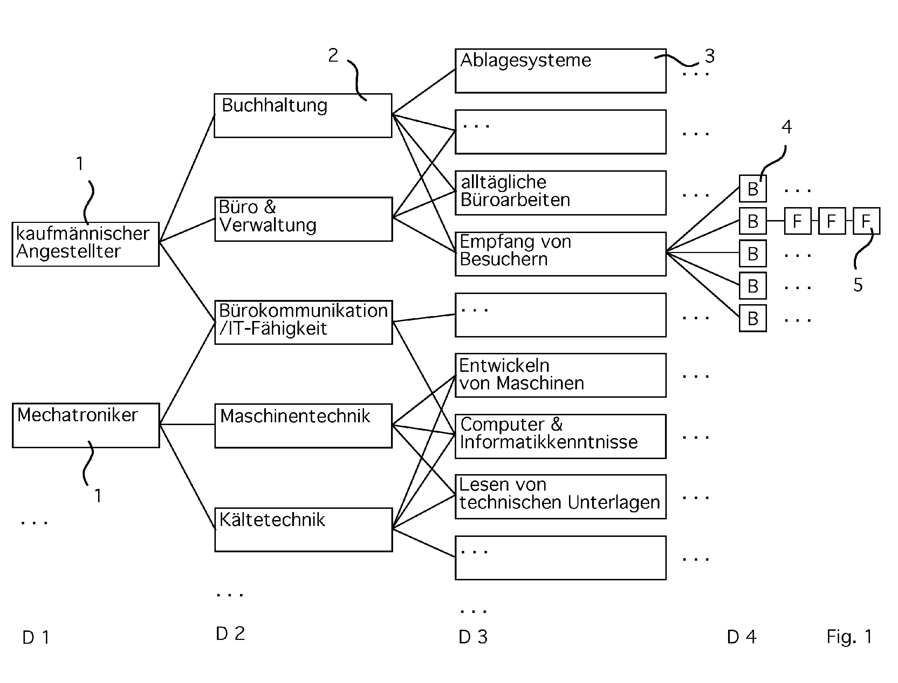

In Fig. 1 ist ein Ausschnitt aus einem mehrdimensionalen Codesystem gezeigt, das jeder Datensatz aufweist. Jeder Datensatz weist folgende Codes auf:
- Code D1, der das Gebiet charakterisiert, auf dem Fähigkeiten der Testperson erfasst und bewertet werden sollen: Dieser Code codiert beispielsweise den Beruf, in dem die Testperson tätig ist oder sein soll. Sind die Gebiete also berufliche Gebiete, so kann mit Code D1 der Beruf der Testperson, beispielsweise kaufmännischer Angestellter, Mechatroniker, Elektroniker, Fremdsprachen-Sekretärin usw., gekennzeichnet sein. Die Codierung kann über Zahlenangaben erfolgen. Beispielweise kann D 1 im Falle des kaufmännischen Angestellten "1", im Falle des Mechatroniker "2", im Falle des Elektronikers "3", im Falle der Fremdsprachen-Sekretärin "4" usw. sein.
- Code D2, der die Fähigkeit der Testperson charakterisiert, die erfasst und bewertet werden soll: Jedem Code D1 sind mehrere Fähigkeit zugeordnet, die mit Code D2 charakterisiert sind. Auch diese Fähigkeiten können mittels Zahlenangaben codiert sein. Beispielsweise sollte ein Mechatroniker (D 1 = 2) über Fähigkeiten auf dem Gebiet der Maschinentechnik (D2 = 1), auf dem Gebiet der Kältetechnik (D2 = 2), auf dem Gebiet der Bürokommunikation und Informationstechnik, die in Fig. 1 als IT-Technik abgekürzt ist, (D2 = 3) usw. besitzen. Ein kaufmännischer Angestellter sollte über Fähigkeiten auf dem Gebiet der Buchhaltung (D2 = 8), auf dem Gebiet "Büro und Verwaltung" (D2 = 9), auf dem Gebiet der IT-Technik (D2 = 3) usw. besitzen. Bestimmte Fähigkeiten, beispielsweise die IT-Technik (D2 = 3), können für verschiedene Berufe von Interesse sein, so dass diese Fähigkeiten mehreren Berufen (D1) zugeordnet sind, während andere Fähigkeiten (D2 = 1, 2, 8, 9) nur einem Beruf (D1) zugeordnet sind. Umgekehrt sind jeden Beruf (D1) mehrere Fähigkeiten (D2) zugeordnet.

- Code D3, der eine Aufgabe charakterisiert, die zur Erfassung und Bewertung der Fähigkeit der Testperson geeignet ist. Jede der Fähigkeiten (D2) sollte durch eine oder mehre Aufgaben getestet werden. Unter Aufgaben wird dabei ein Teilgebiet verstanden, das zu einer Fähigkeit D2 gehört. Die Aufgaben können mittels Zahlenangaben codiert sein. Bei einem kaufmännischen Angestellten (D1), dessen Fähigkeiten in der Buchhaltung (D2) getestet werden sollen, sind beispielsweise folgende Teilbereiche von Interesse: "Ablagesystem und Datenbankmanagement" (D3 = 1), "alltägliche Büroaktivitäten" (D3 = 2), "Büromaterial und Bürotechnik" (D3 = 3), "Empfang von Besuchern" (D3 = 3), "Verwaltungssystem" (D3 = 4) usw.
- Code D4, der einen Begriff charakterisiert, der die Aufgabe kennzeichnet: Jeder der Aufgaben (D3) sind wiederum eine oder mehrere Fachbegriffe zugeordnet, die einem Stichwort gleichen, unter dem die eigentliche Instruktion, die der Datensatz enthält, zusammengefasst werden könnte. Die Fachbegriffe können mittels Zahlenangaben codiert sein. Beispielsweise könnte die Aufgabe (D3) "Empfang von Besuchern" (D3 = 3) folgende Fachbegriffe umfassen: "Besucherbuch" (D4 = 1); "positives Auftreten" (D4 = 2); "professionelle und freundliche Begrüßung" (D4 = 5) usw.

Jedem Begriff (D4) sind eine oder mehrere Datensätze zugeordnet, die jeweils eine Instruktion enthalten. Beispielsweise könnte dem Begriff (D4) "Besucherbuch" (D4 = 1) die Frage "*Sie führen in Ihrer Abteilung ein Besucherbuch. Welche wichtigen und relevanten Daten halten Sie fest?* " zugeordnet sein. Jeder Datensatz enthält gleichzeitig die Reaktion, die von der Testperson erwartet wird.
- Code D5, der die Art der erwarteten Reaktion charakterisiert: Dieser Code zeigt an, ob die Instruktion eine Frage im Sinne eines Multiple-Choice-Testes oder eine offene Frage ist. Die Art der erwarteten Reaktion kann mittels Zahlenangaben codiert sein. Beispielsweise kann eine offene Frage mit "2", eine Multiple-Choice-Frage mit "1" gekennzeichnet sein.
- Code D6, der die Sprache der Instruktion charakterisiert: Damit ist die Sprache gemeint, in der die Instruktion der Testperson präsentiert wird. Die Codierung kann über Zahlenangaben erfolgen. Die Sprache kann beispielsweise "Englisch" (D6 = 1), "Französisch" (D6 = 2) oder "Deutsch" (D6 = 3) sein.

Der Datensatz, der die Frage "*Sie führen in Ihrer Abteilung ein Besucherbuch. Welche wichtigen und relevanten Daten halten Sie fest?* " weist somit folgende Codes auf:
D6 = 3: deutsch
D5 = 1: Multiple-Choice-Frage
D4 = 1: Besucherbuch
D3 = 3: Empfang von Besuchern
D2 = 8: Buchhaltung
D2 = 9: Büro und Verwaltung
D 1 = 1: kaufmännischer Angestellter

Sollte ein Auditor der Ansicht sein, dass die Frage nach dem Empfang von Besuchern auch für Mechatroniker (D1 = 2) von Interesse ist, so könnte er diesen Datensatz auch so codieren, dass er diesem Gebiet zugeordnet ist. Dann würde für diesen Datensatz folgende Codierung gelten:
D6 = 3: deutsch
D5 = 1: Multiple-Choice-Frage
D4 = 1: Besucherbuch
D3 = 3: Empfang von Besuchern
D2 = 8: Buchhaltung
D1 = 1 und 2: kaufmännischer Angestellter und Mechatroniker

In Fig. 1 ist zu erkennen, dass eine Fähigkeit, nämlich die Fähigkeit auf dem Gebiet der Bürokommunikation und der IT-Technik (D2 = 3), mehreren Gebieten (D1) zugeordnet ist, so dass auch die Aufgaben (D3), Begriffe (D4) und Fragen, die der IT-Technik zugeordnet sind, beiden Gebieten (D 1 = 1 und D 1 = 2) zugeordnet sind. Dies kann ebenso für andere Fähigkeiten (D2), Aufgaben (D3), Begriffe (D4) und Datensätze (F) gelten.

Die Merkmale der Testperson, die ebenfalls durch Zahlenangaben codiert sind, sind somit:
- Code T1, der das Gebiet charakterisiert, auf dem Fähigkeiten der Testperson erfasst und bewertet werden sollen. Dieser Code codiert beispielsweise den Beruf, in dem die Testperson tätig ist oder sein soll. Sind die Gebiete also berufliche Gebiete, so kann mit Code T1 der Beruf der Testperson, beispielsweise kaufmännischer Angestellter, Mechatroniker, Elektroniker, Fremdsprachen-Sekretärin usw., gekennzeichnet sein. Die Codierung kann über Zahlenangaben erfolgen. Beispielweise kann T1 im Falle des kaufmännischen Angestellten "1", im Falle des Mechatroniker "2", im Falle des Elektronikers "3", im Falle der Fremdsprachen-Sekretärin "4" usw. sein.
- Code T6, der die Sprache der Testperson charakterisiert: Damit ist die Sprache gemeint, mit der die Testperson das erfindungsgemäße Verfahren absolvieren soll. Die Codierung kann über Zahlenangaben erfolgen. Die Sprache kann beispielsweise "Englisch" (T6 = 1), "Französisch" (T6 = 2) oder "Deutsch" (T6 = 3) sein.
   - ein zweiter Code T7, der die Identität der Testperson charakterisiert. Dieser Code kann beispielsweise eine laufende Nummer sein, so dass jeder Testperson ein eindeutiger Wert zugeordnet ist. Damit können die Ergebnisse einem Auditor anonymisiert zur Verfügung gestellt werden.

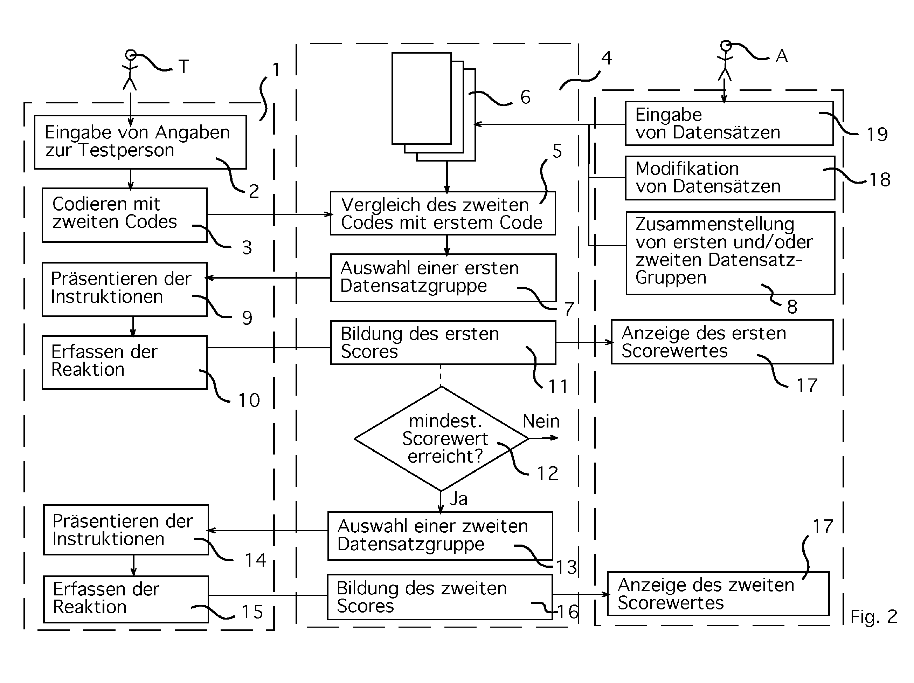

In Fig. 2 ist eine Ausfiihrungsform des erfindungsgemäßen Verfahrens zur Bestimmung der Fähigkeiten einer deutschsprachigen Testperson T beschrieben, die einen Beruf als kaufmännischer Angestellter ausüben will. Die zweiten Codes, die die Merkmale der Testperson charakterisieren, sind damit
T7 = [eindeutige Kennziffer]
T6 = 3: deutsch
T1 = 1: kaufmännischer Angestellter

Diese Merkmale der Testperson werden in Schritt (a) des erfindungsgemäßen Verfahrens über den Client-Computer 1, über den die Testperson diese Angaben beispielsweise mittels einer Computertastatur und einer Computermaus eingibt 2, erfasst und mit den zweiten Codes codiert 3.

Anschließend werden die zweiten Codes gemäß Schritt (b) von dem Client-Computer an den Host-Computer übermittelt. Dort werden die zweiten Codes mit den ersten Codes, die den zweiten Codes zugeordnet sind, verglichen. Auf Basis dieses Vergleiches wird dann eine erste Datensatzgruppe 6 mit einer vorgegebenen Anzahl von Datensätzen ausgewählt 7, bei denen die zweiten Codes mit den ersten Codes übereinstimmen. Im vorliegenden Fall wird somit eine erste Datensatzgruppe ausgewählt, deren Datensätze mit D1 = 1 und D6 = 3 gekennzeichnet sind. Die Datensätze der ersten Datensatzgruppe sind von einem Auditor anhand der ersten Codes vor Beginn des Verfahrens zur Erfassung der Fähigkeiten der Testperson ausgewählt worden 8. Die Datensätze der ersten Datensatzgruppe werden dann vom Host-Computer zu dem Client-Computer der Testperson übertragen. Dort werden der Testperson die Instruktionen, die in den übertragenen Datensätzen enthalten sind, also die Fragen, nacheinander präsentiert 9.

Gemäß Schritt (c) werden die Reaktionen der Testperson auf die präsentieren Instruktionen der Datensätze, also die Antworten, über den Client-Computer erfasst 10 und an den Host-Computer übermittelt.

Anhand der übermittelten Reaktionen wird gemäß Schritt (d) ein erster Score gebildet 11, der für die Fähigkeiten der Testperson charakteristisch ist. Dazu kann mittels eines Vergleiches der übermittelten Antwort mit der erwarteten Antwort festgestellt werden, ob die übermittelte Reaktion richtig, d.h. die übermittelte Antwort entspricht der erwarteten Antwort, oder falsch ist, d.h. die übermittelte Antwort weicht von der erwarteten Antwort ab. Ist die Antwort richtig, so wird die Reaktion einer ersten Bewertungsgruppe zugeordnet, ist die Antwort falsch, so wird die Reaktion einer zweiten Bewertungsgruppe zugeordnet. Die Anzahl der Reaktionen, die der ersten Bewertungsgruppe zugeordnet worden sind, kann dann als erster Score verwendet werden. Eine solche dichotome Klassifikation ist besonders vorteilhaft bei Multiple-Choice-Tests. Insbesondere bei sogenannten "offenen Fragen" kann es vorteilhaft sein, weitere Bewertungsgruppen hinzuzufügen, beispielsweise wenn eine Antwort nicht vollständig ist, aber dennoch wesentliche Aspekte der erwarteten Reaktion enthält. Hier kann beispielsweise ein Punktesystem angewendet werden. Beispielsweise können fünf Punkte bei einer vollständigen Antwort, vier Punkte bei einer nicht ganz vollständigen Antwort, usw. bis zu null Punkten, bei einer vollständig falschen Antwort vorgegeben werden. Die Punktvergabe kann durch eine computergestützte Textanalyse oder von einem Auditor vorgenommen werden. Der Scorewert des ersten Scores kann als weiterer zweiter Code, Code T8, der Testperson zugeordnet und in der Datenbank gespeichert werden.

Erreicht die Testperson einen Scorewert des ersten Scores, der über einem vorgegebenen Scorewert liegt 12, so kann sich eine zweite Stufe zur weitergehenden Bewertung der Fähigkeiten der Testperson anschließen. Dazu kann der Testperson eine zweite Datensatzgruppe präsentiert werden 14, die weitere Fähigkeiten D2 der Testperson oder bereits in der ersten Stufe getestete Fähigkeiten D2 durch weitere Fragen testet. Die Datensätze der zweiten Datensatzgruppe werden wiederum von einem Auditor anhand der Codierung zusammengestellt 8. Die Datensätze der zweiten Datensatzgruppe sind ebenso codiert wie die Datensätze der ersten Datensatzgruppe, außer dass ein weiterer erster Code, Code D8, hinzukommt, der den erforderlich Scorewert des ersten Scores charakterisiert, der erforderlich ist, damit dieser Datensatz einer Testperson präsent werden darf.

Beispielsweise kann vorgesehen sein, dass der D8 = 5 ist, d. h. 50 % der erfassten Reaktionen auf Instruktionen von Datensätzen der ersten Gruppe müssen erwarteten Reaktionen entsprechen.

Würde der Datensatz, der die Frage "*Sie führen in Ihrer Abteilung ein Besucherbuch. Welche wichtigen und relevanten Daten halten Sie fest?* " aufweist, ein Datensatz sein, der der ersten Datensatzgruppe zugeordnet ist, so würde er beispielsweise folgende Codes aufweisen:
D8 = 0 (d.h. es ist kein Scorewert des ersten Scores erforderlich)
D6 = 3: deutsch
D5 = 1: Multiple-Choice-Frage
D4 = 1: Besucherbuch
D3 = 3: Empfang von Besuchern
D2 = 8: Buchhaltung
D2 = 9: Büro und Verwaltung
D 1 = 1: kaufmännischer Angestellter

Würde der Datensatz, der die Frage "*Sie führen in Ihrer Abteilung ein Besucherbuch. Welche wichtigen und relevanten Daten halten Sie fest?* " aufweist, ein Datensatz sein, der der zweiten Datensatzgruppe zugeordnet ist, so würde er beispielsweise folgende Codes aufweisen:
D8 = 5 (d.h. es ist ein Scorewert von mindestens 5 des ersten Scores erforderlich)
D6 = 3: deutsch
D5 = 1: Multiple-Choice-Frage
D4 = 1: Besucherbuch
D3 = 3: Empfang von Besuchern
D2 = 8: Buchhaltung
D2 = 9: Büro und Verwaltung
D 1 = 1: kaufmännischer Angestellter

Erreicht eine Testperson einen Scorewert des ersten Scores von 7, so sind die zweiten Codes, die die Merkmale der Testperson charakterisieren, damit
T8 = 7: 70 % der übermittelten Reaktionen waren richtige Antworten
T7 = [eindeutige Kennziffer]
T6 = 3: deutsch
T1 = 1: kaufmännischer Angestellter

In der zweiten Stufe werden die zweiten Codes mit den ersten Codes, die den zweiten Codes zugeordnet sind, verglichen. Auf Basis dieses Vergleiches wird dann eine zweite Datensatzgruppe mit einer vorgegebenen Anzahl von Datensätzen ausgewählt 13, bei denen die zweiten Codes mit den ersten Codes übereinstimmen. Im vorliegenden Fall wird somit eine zweite Datensatzgruppe ausgewählt, deren Datensätze mit D1 = 1, D6 = 3 und D8 = 5 gekennzeichnet sind. Die Datensätze der zweiten Datensatzgruppe sind von einem Auditor anhand der ersten Codes vor Beginn des Verfahrens zur Erfassung der Fähigkeiten der Testperson ausgewählt worden. Die Datensätze der zweiten Datensatzgruppe werden dann vom Host-Computer zu dem Client-Computer der Testperson übertragen. Dort werden der Testperson die Instruktionen, die in den übertragenen Datensätzen enthalten sind, also die Fragen, nacheinander präsentiert.

Die Reaktionen der Testperson auf die präsentierten Instruktionen der Datensätze, also die Antworten, werden dann über den Client-Computer erfasst 15 und an den Host-Computer übermittelt.

Ebenso wie in der ersten Stufe des Testverfahrens wird anhand der übermittelten Reaktionen schließlich ein zweiter Score gebildet 16, der für die Fähigkeiten der Testperson charakteristisch ist. Der Scorewert des zweiten Scores kann als weiterer zweiter Code, Code T9, der Testperson zugeordnet und in der Datenbank gespeichert werden. Beide Scores können einem Auditor zur Verfügung gestellt werden 17, der mit der Testperson, wenn diese einen vom Auditor vorgegebenen Scorewert des ersten Scores und einen vorgegebenen Scorewert des zweiten Scores erreicht hat, beispielsweise ein persönliches Gespräch, ein Audit, ein Assessment oder eine praktische Übung führen kann, um weitere Erkenntnisse über die Testperson gewinnen zu können.

Die Datensätze der ersten und zweiten Datensatzgruppen 6 werden von einem Auditor aus der Vielzahl von Datensätzen ausgewählt 8, die auf dem Host-Computer hinterlegt sind. Beabsichtigt der Auditor, die Eignung einer Testperson für eine Tätigkeit als kaufmännischer Angestellter festzustellen, so kann er aus der Vielzahl von Datensätzen Datensätze nach seinen Vorstellungen zu ersten und, sofern er dies wünscht, zweiten Datensatzgruppen zusammenstellen. Durch das Ziel des Testverfahrens, nämlich die Eignung der Testperson für die Tätigkeit als kaufmännischer Angestellter festzustellen, hat er die Auswahl bereits auf Datensätze mit dem ersten Code D1 = 1 beschränkt. Wünscht er nun, die Testung bestimmter Fähigkeiten D2, so kann dies Datensätze auswählen, die mit dem Code D1 = 1 gekennzeichnet sind und der von ihm bestimmten Fähigkeit D2 zugeordnet sind, also beispielsweise Datensätze mit D2 = 3, D2 = 8 und/oder D2 = 9. Aus den Datensätzen mit diesen ersten Codes D1 und D2 wird er wiederum Datensätze mit von ihm gewünschten Code D3 und unter diesen wieder Datensätze mit dem von ihm gewünschten Code D4 auswählen. Unter den nun ausgewählten Datensätzen kann er wiederum die Datensätze auswählen, die der Testperson tatsächlich übermittelt werden sollen. Die ausgewählten Datensätze werden zu einer ersten oder zweiten Datensatzgruppe zusammengefasst und auf dem Host-Computer gespeichert. Durch das Setzen von Code D7 kann der Auditor die erste oder zweite Datensatzgruppe einer oder mehreren Testpersonen zuweisen.

Auf diese ersten oder zweiten Datensatzgruppen, sogenannte Prüfungen, können auch zu einem späteren Zeitpunkt derselbe oder ein anderer Auditor zum Testen einer anderen Testperson zurückgreifen. Dabei kann die Datensatzgruppe von dem Auditor modifiziert werden 18, beispielsweise indem bestimmte Datensätze gelöscht und/oder neue Datensätze hinzugefügt 19 werden. Auch die modifizierten Datensatzgruppen werden auf dem Host-Computer gespeichert und in dem erfindungsgemäßen Verfahren verwendet, wenn die Fähigkeiten einer Testperson, die auf demselben Gebiet D1 getestet werden soll, erfasst und bewertet werden sollen.

## Patentansprüche

1. Verfahren zur Erfassung und Bewertung menschlicher Fähigkeiten mittels eines computergestützten Systems, wobei das System eine Vielzahl von Client-Computern umfasst, die über eine Kommunikationseinrichtung mit einem Host-Computer verbunden sind, wobei
- auf dem Host-Computer eine Vielzahl von Datensätzen, die jeweils eine Instruktion für eine Testperson und zumindest eine erwartete Reaktion der Testperson beschreiben, gespeichert ist, wobei jeder Datensatz mit einem mehrdimensionalen Codesystem **gekennzeichnet** ist, das aus ersten Codes gebildet ist, wobei jeder erste Code eine Eigenschaft des Datensatzes kennzeichnet; und
- aus der Vielzahl von Datensätzen eine oder mehrere erste Datensatzgruppen mit einer vorgegebenen Zahl von Datensätzen ausgewählt sind, wobei jeder Datensatz einer Datensatzgruppe zumindest einen gemeinsamen ersten Code, den keine andere Datensatzgruppe aufweist, und zumindest einen gemeinsamen ersten Code aufweist, den auch andere Datensatzgruppen aufweisen können;
wobei das Verfahren die folgenden Schritte umfasst:
(a) Erfassen von Merkmalen der Testperson über einen Client-Computer, wobei jedem Merkmal ein zweiter Code zugeordnet ist und zumindest einem zweiten Code der erste Code zugeordnet ist;
(b) Übermitteln der erfassten zweiten Codes an den Host-Computer, Vergleichen der zweiten Codes mit den ersten Codes und Auswählen einer ersten Datensatzgruppe, die Datensätze umfasst, bei denen der zweite Code mit dem ersten Code, den keine andere Datensatzgruppe aufweist, übereinstimmt; Übermitteln der Datensätze der ausgewählten Datensatzgruppe an den Client-Computer und Präsentieren der Instruktionen, die in den übermittelten Datensätzen enthalten sind, der Testperson;
(c) Erfassen der Reaktionen der Testperson auf jede präsentierte Instruktion eines übermittelten Datensatzes über den Client-Computer und Übermitteln der erfassten Reaktion an den Host-Computer, und
(d) Bilden eines ersten Scores, der für die menschlichen Fähigkeiten der Testperson charakteristisch ist, anhand der erfassten und übermittelten Reaktionen der Testperson, indem diese Reaktionen einer vorgegebenen Zahl von Bewertungsgruppen zugeordnet werden.

2. Verfahren nach Anspruch 1,
**dadurch gekennzeichnet,**
**dass** das mehrdimensionale Codesystem folgende erste Codes umfasst:
- einen ersten Code D1, der das Gebiet charakterisiert, auf dem Fähigkeiten der Testperson erfasst und bewertet werden sollen;
- einen ersten Code D2, der die Fähigkeit der Testperson charakterisiert, die erfasst und bewertet werden soll;
- einen ersten Code D3, der eine Aufgabe charakterisiert, die zur Erfassung und Bewertung der Fähigkeit der Testperson geeignet ist; und
- einen ersten Code D4, der einen Begriff charakterisiert, der die Aufgabe kennzeichnet.

3. Verfahren nach Anspruch 2,
**dadurch gekennzeichnet,**
**dass** das mehrdimensionale Codesystem ferner folgende erste Codes umfasst:
- einen ersten Code D5, der die Art der erwarteten Reaktion charakterisiert; und
- einen ersten Code D6, der die Sprache der Instruktion charakterisiert.

4. Verfahren nach Anspruch 2 oder Anspruch 3,
**dadurch gekennzeichnet,**
**dass** der gemeinsame erste Code von Datensätzen einer ersten Datensatzgruppe, den keine andere Datensatzgruppe aufweist, der erste Code D1 ist und dass ein gemeinsamer erster Code der Datensätzen dieser ersten Datensatzgruppe, den auch andere Datensatzgruppen aufweisen können, der Code D2 ist.

5. Verfahren nach einem der vorstehenden Ansprüche,
**dadurch gekennzeichnet,**
**dass** die zweiten Codes, die die Merkmale einer Testperson charakterisieren, einen zweiten Code T1 umfassen, der das Gebiet charakterisiert, auf dem Fähigkeiten der Testperson erfasst und bewertet werden sollen.

6. Verfahren nach Anspruch 5,
**dadurch gekennzeichnet,**
**dass** zumindest einer der folgenden zweiten Codes in Schritt (a) vorgesehen ist:
- ein zweiter Code T6, der die Sprache der Testperson charakterisiert; und
- ein zweiter Code T7, der die Identität der Testperson charakterisiert.

7. Verfahren nach Anspruch 5 oder Anspruch 6,
**dadurch gekennzeichnet,**
**dass** der zweite Code T1 dem ersten Code D1 zugeordnet ist.

8. Verfahren nach einem der vorstehenden Ansprüche,
**dadurch gekennzeichnet,**
**dass** zumindest einer der Client-Computer einer ersten Personengruppe, deren Fähigkeiten erfasst und bewertet werden sollen, zugeordnet wird und zumindest ein anderer der Client-Computer einer zweiten Personengruppe zugeordnet wird, wobei eine Person der ersten Personengruppe die Testperson ist und eine Person der zweiten Personengruppe aus der Vielzahl der Datensätze die ersten Datensatzgruppen auswählt.

9. Verfahren nach einem der vorstehenden Ansprüche,
**dadurch gekennzeichnet,**
**dass** in Schritt (d) jeder Reaktion ein erster Klassifikator zugeordnet wird, wobei der erste Klassifikator die Reaktion einer ersten Bewertungsgruppe, wenn die Reaktion der Person eine erwartete Reaktion ist, oder einer zweiten Bewertungsgruppe zuordnet, wenn die Reaktion der Person nicht eine erwartete Reaktion ist, und auf Basis dieser Klassifikation der erste Score gebildet wird.

10. Verfahren nach einem der vorstehenden Ansprüche,
**dadurch gekennzeichnet,**
**dass** auf Basis des für die Testperson gebildeten Scores eine zweite Datensatzgruppe, die eine vorgegebene Zahl von Datensätzen umfasst, ausgewählt wird, wobei die zweite Datensatzgruppe nur solche Datensätze umfasst, die mit einem der ersten Codes **gekennzeichnet** sind, wobei dieser Code den Score codiert, der erforderlich ist, damit diese Datensätze der zweiten Datensatzgruppe zugeordnet werden können; die ausgewählten Datensätze an den Client-Computer übermittelt werden, und die Instruktionen, die in den übermittelten Datensätzen enthalten sind, der Testperson präsentiert werden; und
**dass** die Reaktionen der Testperson auf jede präsentierte Instruktion eines übermittelten Datensatzes über den Client-Computer erfasst und an den Host-Computer übermittelt werden, wobei jeder Reaktion ein zweiter Klassifikator zugeordnet wird, wobei der zweite Klassifikator die Reaktion der Testperson einer von wenigstens zwei Bewertungsgruppen zuordnet und auf Basis dieser Klassifikation ein zweiter Score gebildet wird, der für die menschlichen Fähigkeiten der Testperson charakteristisch ist.

11. Verfahren nach einem der Ansprüche 1 bis 8,
**dadurch gekennzeichnet,**
**dass** auf Basis des für die Testperson gebildeten ersten Scores eine zweite Datensatzgruppe, die eine vorgegebene Zahl von Datensätzen umfasst, ausgewählt wird, wobei die zweite Datensatzgruppe nur solche Datensätze umfasst, die mit einem der ersten Codes **gekennzeichnet** sind, wobei dieser Code den Score codiert, der erforderlich ist, damit diese Datensätze der zweiten Datensatzgruppe zugeordnet werden können; die ausgewählten Datensätze an den Client-Computer übermittelt werden; und die Instruktionen, die in den übermittelten Datensätzen enthalten sind, der Testperson präsentiert werden;
**dass** die Reaktionen der Testperson auf jede präsentierte Instruktion eines übermittelten Datensatzes über den Client-Computer erfasst und an den Host-Computer übermittelt werden;
**dass** auf einen Client-Computer, der einer Person der zweiten Personengruppe zugeordnet ist, von dem Host-Computer der erste Score einer Testperson sowie die dieser Testperson übermittelten Datensätze der zweiten Datensatzgruppe und deren Reaktionen übertragen werden; und eine Person der zweiten Gruppe über den Client-Computer eine Klassifikation der Reaktionen der Testperson auf die Instruktionen der Datensätze der zweiten Datensatzgruppe unter Bildung eines zweiten Scores vornimmt.

12. Verfahren nach einem der vorstehenden Ansprüche,
**dadurch gekennzeichnet,**
**dass** an einen Client-Computer, der einer Person der zweiten Personengruppe zugeordnet ist, von dem Host-Computer zumindest eine der Informationen über eine Testperson übertragen wird, die aus der Gruppe ausgewählt ist, die den ersten Score, den zweiten Score, die der Testperson übermittelten Datensätze der ersten und der zweiten Datensatzgruppe und deren Reaktionen umfasst.

13. Verfahren nach einem der vorstehenden Ansprüche,
**dadurch gekennzeichnet,**
**dass** über einen Client-Computer, der einer Person der zweiten Personengruppe zugeordnet ist, neue Datensätze und deren erste Codes eingegeben und/oder dass erste Codes gespeicherter Datensätze verändert werden.

14. Computergestütztes System zur Erfassung und Bewertung menschlicher Fähigkeiten mittels eines Verfahrens gemäß einem der Ansprüche 1 bis 13, wobei das System eine Vielzahl von Client-Computern umfasst, die über eine Kommunikationseinrichtung mit einem Host-Computer verbunden sind, wobei zumindest einer der Client-Computer einer ersten Personengruppe, deren Fähigkeiten erfasst und bewertet werden sollen, zugeordnet ist und zumindest ein anderer der Client-Computer einer zweiten Personengruppen zugeordnet ist, wobei
- auf dem Host-Computer eine Vielzahl von Datensätzen, die jeweils eine Instruktion für eine Testperson und zumindest eine erwartete Reaktion der Testperson beschreiben, gespeichert ist, wobei jeder Datensatz mit einem mehrdimensionalen Codesystem **gekennzeichnet** ist, das aus ersten Codes gebildet ist, wobei jeder erste Code eine Eigenschaft des Datensatzes kennzeichnet; und
- von einer Person der zweiten Personengruppe aus der Vielzahl von Datensätzen eine oder mehrere erste Datensatzgruppen mit einer vorgegebenen Zahl von Datensätzen ausgewählt sind, wobei jeder Datensatz einer Datensatzgruppe zumindest einen gemeinsamen ersten Code, den keine andere Datensatzgruppe aufweist, und zumindest einen gemeinsamen ersten Code aufweist, den auch andere Datensatzgruppen aufweisen können;
- Merkmale der Testperson über einen Client-Computer erfasst werden, wobei jedem Merkmal ein zweiter Code zugeordnet ist und zumindest einem zweiten Code der erste Code zugeordnet ist, den keine andere Datensatzgruppe aufweist;
- die erfassten zweiten Codes an den Host-Computer übermittelt, dort die zweiten Codes mit den ersten Codes verglichen werden und eine erste Datensatzgruppe, die Datensätze umfasst, bei denen der zweite Code mit dem ersten Code, den keine andere Datensatzgruppe aufweist, übereinstimmt, ausgewählt wird; die Datensätze der ausgewählten Datensatzgruppe an den Client-Computer übermittelt und die Instruktionen, die in den übermittelten Datensätzen enthalten sind, der Testperson präsentiert werden;
- die Reaktionen der Testperson auf jede präsentierte Instruktion eines übermittelten Datensatzes über den Client-Computer erfasst und die erfassten Reaktion an den Host-Computer übermittelt werden, und
- ein erster Score, der für die menschlichen Fähigkeiten der Testperson charakteristisch ist, anhand der erfassten und übermittelten Reaktionen der Testperson gebildet wird, indem diese Reaktionen einer vorgegebenen Zahl von Bewertungsgruppen zugeordnet werden.

15. System nach Anspruch 14,
**dadurch gekennzeichnet,**
**dass** die Kommunikationseinrichtung ein Datennetzwerk umfasst.
